# EUROPEAN PATENT SPECIFICATION

(11) **EP 2 099 253 B1**
(45) Date of publication and mention of the grant of the patent: **07.10.2020**
(21) Application number: 08783986.6
(22) Date of filing: 14.08.2008
(51) Int. Cl.: H04W 84/00, H04M 3/42, H04L 12/54, H04M 7/00, H04W 4/00, G10L 25/78

(54) **METHOD FOR VOICE ACTIVITY DETECTION CONTROLLING AND CONTROLLING DEVICE THEREOF**
VERFAHREN ZUR SPRACHAKTIVITÄTSERKENNUNGSKONTROLLE UND ZUGEHÖRIGES KONTROLLGERÄT
PROCÉDÉ DE COMMANDE DE DÉTECTION D'ACTIVITÉ VOCALE ET DISPOSITIF DE COMMANDE APPARENTÉ

(30) Priority: 17.08.2007 CN 200710076520
(43) Date of publication of application: 09.09.2009
(73) Proprietor: Huawei Technologies Co., Ltd., Longgang District Shenzhen, Guangdong 518129 (CN)
(72) Inventor: LIU, Zhenhua, Shenzhen Guangdong 518129 (CN)
(74) Representative: Isarpatent
(86) International application number: PCT/CN2008/071995
(87) International publication number: WO 2009/024066

(56) References cited:
- WO-A1-01/09878
- WO-A1-2006/009362
- WO-A1-2007/078186
- WO-A2-02/03376
- WO-A2-02/03376
- WO-A2-2005/043926
- WO-A2-2006/026221
- CN-A- 1 529 526
- CN-A- 1 867 003
- CN-A- 101 159 891

## Description

### FIELD OF THE INVENTION

The present invention relates to a field of communication technology, and more particularly to a voice activity detection (VAD) control method and a control device thereof.

### BACKGROUND OF THE INVENTION

With the rapid development of technologies for providing value-added services, various value-added services emerge. A color ring back tone (CRBT), i.e. personalized ring back tone (RBT) service enables a calling party to hear various music customized by called parties during ringing the called parties when calling the called parties, and is undergoing a rapid development as it changes the conventional situation that the calling party can only hear a monotonous tone when waiting for the called party to pick up the phone, and improves the user experience. The CRBT service is applicable to mobile networks and fixed networks, and generally, the content that is played through a CRBT may be a piece of music, a song, a short story, or the like.

Generally speaking, a conversation between a calling party and a called party needs to be transferred through a voice over Internet protocol (IP) (VOIP) (or voice over asynchronous transfer mode (VOATM)) path. If the called party has subscribed for a CRBT service, the CRBT also needs to be transferred from the called side to the calling side through the VOIP (or VOATM) path. In the prior art, when using the VOIP (or VOATM) path, a narrow-band compression encoding/decoding technology is generally used to encode/decode the transmitted signals. In order to decrease the bandwidth occupied by narrow-band encoding/decoding, a voice activity detection (VAD) technology is usually used when encoding/decoding. The VAD is a voice distinguishing technology. A telephone conversation of users is generally a bi-directional communication. Both the calling party and the called party spend about half of the conversation time in listening. When the calling party or the called party listens to the counterpart, no loud voices need to be transferred. At this time, voice signals detected by an encoder are relatively weak, and basically are background noises. The encoder only detects a part of background sounds, and encodes and outputs this part of background sounds. The voice signal data is very few, and thus occupies a low bandwidth. For the background noises, the number of frames to be transferred may generally be reduced. Thus, the VAD technology may decrease the transmission bandwidth for encoding/decoding without affecting the voice quality.

In the process of implementing the present invention, the inventor finds that at least the following problems exist in the prior art. The VAD technology in the prior art is generally effective for human voices, but is incapable of effectively determining a spectrum of music, causing that some part of music is not transferred as a valid sound. When CRBT contents such as music and songs are transferred from the called side to the calling side through the VOIP (VOATM) path, the musical effect is deteriorated by the VAD technology in the narrow-band compression encoding/decoding technology. Therefore, the musical effect of the CRBT in the prior art is usually undesirable, and sometimes the music can not even be heard clearly. WO 02/03376 A1 discloses a ringback detector which determines whether ringback is present by comparing measurements of a characteristic of the received signal, such as the energy of the received signal, to a threshold. WO 2005/043926 A2 discloses a substitute multimedia ringback tone providing method for diversifying the format of the ringback tone to maximize the personality of each user transmitting the ringback tone data utilizing previously established circuit resources. CN 1867003 A discloses a system for realizing multimedia backward bell service and relative method. WO 2006/026221 A2 discloses a telephone and a method for providing outbound audio when the telephone is operating in a speakerphone mode. WO 01/09878 A1 discloses an extended signal coding system that accommodates substantially music-like signals within a signal while maintaining a high perceptual quality in a reproduced signal during discontinued transmission operation. WO 2007/078186 A1 discloses a method of pre-processing an audio signal transmitted to a user terminal via a communication network and an apparatus using the method.

### SUMMARY OF THE INVENTION

Accordingly, various embodiments of the present invention provide a VAD control method and a control device thereof, so as to solve the problem that the musical effect of the transferred CRBT is affected by the VAD technology in the prior art.

In view of the above, one embodiment of the present invention provides a VAD control method, which includes the following steps.

When a called party sends an RBT in response to a call request of a calling party, it is determined by a switch whether the RBT is a personalized RBT or not, and if not, the process is ended, wherein the RBT comprises one of the personalized RBT and a standard RBT, and the personalized RBT is a color ring back tone, CRBT; otherwise, a VAD function of an encoder in a call path is turned off by the switch; and when the switch identifies the called party and the calling party enter a conversation state, the VAD function of the encoder is turned on by the switch.

The present invention further provides a VAD control method, which includes the following steps.

When a called party sends an RBT in response to a call request of a calling party, a VAD function of an encoder in a call path is turned off by a switch, and it is detected by the switch whether a standard RBT of the called party is received, wherein the RBT comprises one of a personalized RBT and a standard RBT, and the personalized RBT is a color ring back tone, CRBT; and if the standard RBT is detected, the VAD function of the encoder is turned on by the switch; otherwise, when the switch identifies the called party and the calling party enter a conversation state, the VAD function of the encoder is turned on by the switch.

The present invention further provides a switch. The switch includes an identification unit, a determination unit, and a control unit. The determination unit is configured to determine whether an RBT in a call is a personalized RBT or not, and instruct the control unit to turn off a VAD function of an encoder in a call path if yes, wherein the RBT comprises one of the personalized RBT and a standard RBT, and the personalized RBT is a color ring back tone, CRBT. The identification unit is configured to identify whether a calling party and a called party are in a conversation stage or not, and instruct the control unit to turn on the VAD function of the encoder in the call path if yes.

The present invention further provides a switch. The switch includes an identification unit, a control unit, and a detection unit.

The identification unit is configured to identify whether a calling party and a called party are in an RBT stage or in a conversation stage, and transmit an identification result to the control unit.

The detection unit detects whether an RBT of a call is a standard RBT, and transmits a detection result to the control unit, wherein the RBT comprises one of a personalized RBT and the standard RBT, and the personalized RBT is a color ring back tone, CRBT.

When the identification unit identifies that the calling party and the called party are in the RBT stage, the control unit is configured to turn off a VAD function of an encoder in a call path. When the detection unit detects that the RBT of the call is the standard RBT, the control unit is configured to turn on the VAD function of the encoder in the call path, and does not turn on the VAD function of the encoder in the call path until the called party and the calling party are in the conversation stage if the detection unit detects the RBT is not a standard RBT.

The invention is defined by the independent claims. Preferred embodiments are disclosed in the dependent claims.

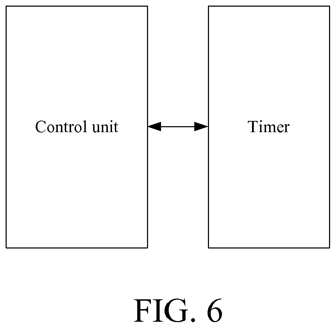

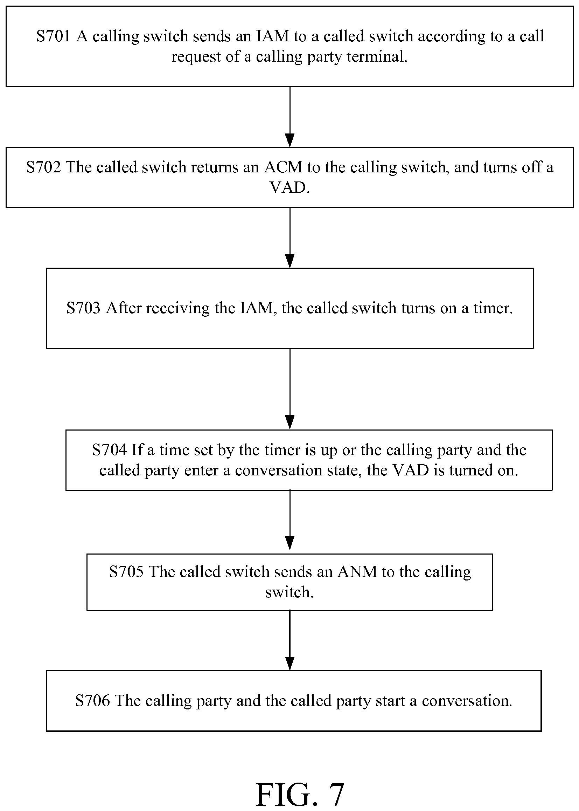

The example disclosed in figures 6 and 7 and the corresponding description passages is not part of the invention and represents merely an example useful for understanding of the invention.

### BRIEF DESCRIPTION OF THE DRAWINGS

FIG. 1 is a structural view of a system according to an embodiment of the present invention;
FIG. 2 is a block diagram illustrating the principle of a called switch according to an embodiment of the present invention;
FIG. 3 is a flow chart of an embodiment of the present invention;
FIG. 4 is a block diagram illustrating the principle of a called switch according to another embodiment of the present invention;
FIG. 5 is a flow chart according to another embodiment of the present invention;
FIG. 6 is a block diagram illustrating the principle of a called switch according to an illustrative example, which is not part of the invention; and
FIG. 7 is a flow chart according to further another an illustrative example, which is not part of the invention,

### DETAILED DESCRIPTION OF THE EMBODIMENTS

The technical solution provided in the present invention lies in that, the CRBT service is only played when the called party is ringing, so that when the VAD function is turned off in the RBT stage, CRBT contents in the RBT stage will not be adversely affected by the VAD technology; and when the VAD function is turned on in the conversation stage, it is ensured that the bandwidth occupied by encoding/decoding can be effectively decreased by using the VAD technology in the conversation stage.

In order to make the objective, technical solution and advantages of the present invention comprehensible, the present invention is further illustrated in detail below with reference to the accompanying drawings and embodiments. It should be understood that, the specific embodiments described here are merely intended to explain the present invention, but not to limit the present invention.

Applications of the technical solution provided in the present invention are illustrated in detail below by taking a VOIP device as an example. The technical solution provided in the present invention is also applicable to voice over ATM (VOATM), voice over frame relay (VOFR), and so on, which can be implemented by those skilled in the art without carrying out creative activities, and thus the details will not be described herein again.

One embodiment of the present invention:

If a VOIP device at the called side determines that an RBT of a call is a CRBT, a VAD can be directly turned off in an RBT stage, and turned on in a conversation stage.

Specifically, there are a variety of methods for the VOIP device at the called side to determine whether an RBT of a call is a CRBT or not, and several examples are provided as follows.

1. A called switch may directly make such a determination based on "subscription data" of a called party.

For example, a CRBT SS-CODE (254) service code carried in an SRI-ACK message sent from a home location register (HLR) to a mobile switching center (MSC) indicates that the call is a CRBT call. Also, other messages may also be used to obtain CRBT subscription data of a subscriber.

2. The called switch may directly make such a determination based on "service code + called number".

For example, when the MSC initiates a call to a CRBT platform, the called number is "12531 + mobile subscriber international integrated services digital network (MSISDN) number of the called party". Here, 12531 is an example of a prefix, which should be configurable in practical applications. At this time, a switch between the MSC and the CRBT platform may determine whether the call is a CRBT service according to the prefix 12531.

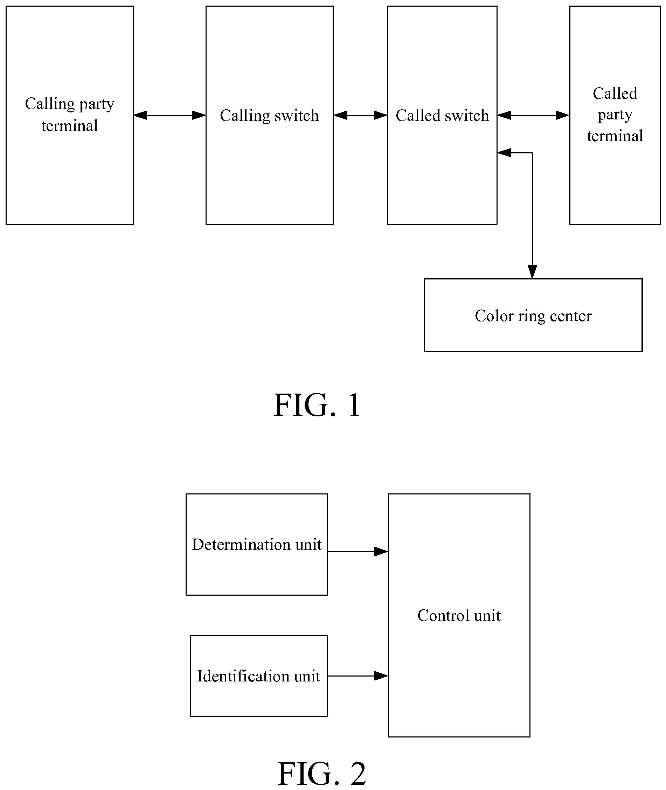

FIG. 1 is a structural view of a system of this embodiment. The system includes a calling party terminal, a calling switch, a called switch, a CRBT center, and a called party terminal.

FIG. 2 is a block diagram illustrating the principle of a switch (only parts related to the present invention are described here, and other parts are not shown). The switch includes a call identification unit, a determination unit, and a control unit. The determination unit is configured to determine whether an RBT of a call is a CRBT or not. If the RBT of a call is a CRBT, the determination unit instructs the control unit to turn off a VAD function of an encoder in a call path. The control unit is configured to turn off the VAD function of the encoder in the call path according to the instruction of the determination unit. The identification unit is configured to identify whether a calling party and a called party are in a conversation stage, and when the calling party and the called party are in a conversation stage, the identification unit instructs the control unit to turn on the VAD function of the encoder in the call path. The control unit is configured to turn on the VAD function of the encoder in the call path according to the instruction of the identification unit.

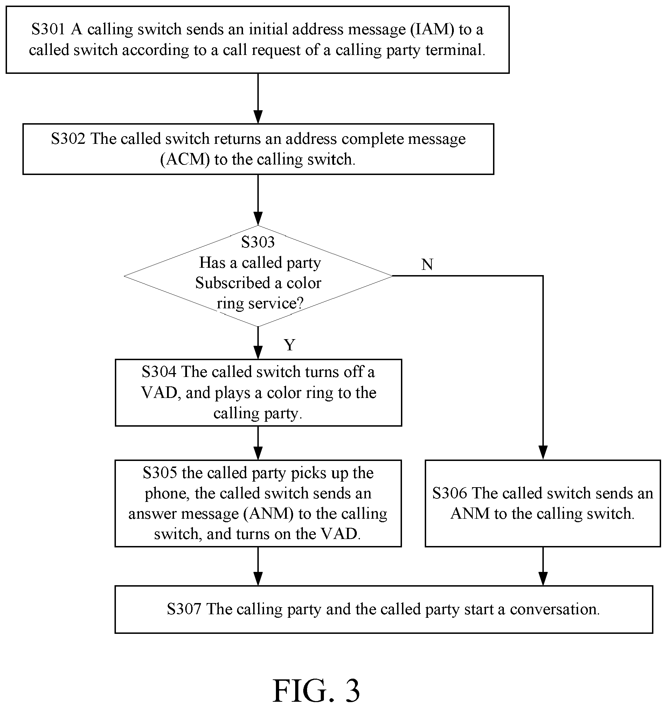

FIG. 3 is a flow chart of this embodiment, which includes the following steps (taking SS7 signaling as an example).

In Step S301, the calling switch sends an initial address message (IAM) to the called switch according to a call request of the calling party terminal.

In Step S302, the called switch returns an address complete message (ACM) to the calling switch.

In Step S303, after receiving the IAM, the called switch determines whether the called party has subscribed a CRBT service or not according to subscription data of the called party or a service code and a called number of this call, and if yes, the process proceeds with Step S304; otherwise, it proceeds with Step S306.

In Step S304, the called switch turns off the VAD function of the encoder in the call path, and plays a CRBT to the calling party.

In Step S305, the called party picks up the phone, the called switch sends an answer message (ANM) to the calling switch, and then Step S307 is performed.

In Step S306, the called switch sends an ANM to the calling switch.

In Step S307, the calling party and the called party start a conversation, and the VAD function of the encoder in the call path is turned on.

Though specific signaling parameters for distinguishing an RBT stage and a conversation stage vary with different inter-exchange signaling, principles of applying the technical solution provided in this embodiment are basically the same, which is well known to those skilled in the art.

In this embodiment, the called switch determines that whether the RBT is a CRBT or not. However, when the technical solution provided in this embodiment of the present invention is specifically applied, the CRBT service not only can be realized by a called side device, but also can be realized by other devices in the call path, so that a device for determining whether an RBT is a CRBT or not is not limited to the called switch, but may also be, for example, the calling switch, or one or more other switches or other devices between the calling party and the called party.

Another embodiment of the present invention:

A VOIP device at the called side does not determine whether a user has subscribed a CRBT service or not. The VOIP device first turns off a VAD function of an encoder in a call path in an RBT stage, and detects whether a standard RBT of a called party is received or not. If the standard RBT played by the called side device is received, it indicates that no CRBT exists, and the VAD function of the encoder in the call path is automatically turned on. If no standard RBT is detected, it indicates that the RBT is a CRBT, and the VAD function of the encoder in the call path will not be turned on until the conversation stage. As a standard RBT in each country is a combination of several signal tones at specific frequencies, a called switch can easily detect whether a voice signal is a standard RBT or not.

Referring to FIG. 1, the system according to this embodiment includes a calling party terminal, a calling switch, a called switch, a CRBT center, and a called party terminal.

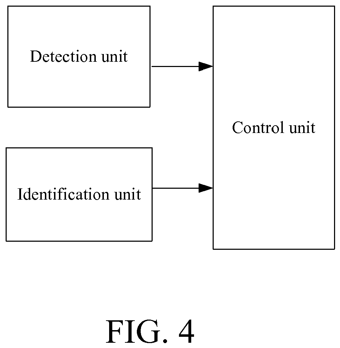

FIG. 4 is a block diagram illustrating the principle of the called switch. The called switch includes a call identification unit, a control unit, and a detection unit. The detection unit is configured to detect whether an RBT of a call is a standard RBT or not and transfer a detection result to the control unit. The control unit is configured to determine to turn on or turn off the VAD function of the encoder in the call path according to the detection result transferred by the detection unit. The identification unit is configured to identify whether a calling party and a called party are in an RBT stage or in a conversation stage. When the identification unit identifies that the calling party and the called party are in the RBT stage, the control unit first turns off the VAD function in the call path, and the detection unit performs a detection operation. If the detection unit detects that the RBT of this call is not a standard RBT, the control unit will not turn on the VAD function of the encoder in the call path until the conversation stage. If the detection unit detects that the RBT of this call is a standard RBT, the control unit directly turns on the VAD function of the encoder in the call path.

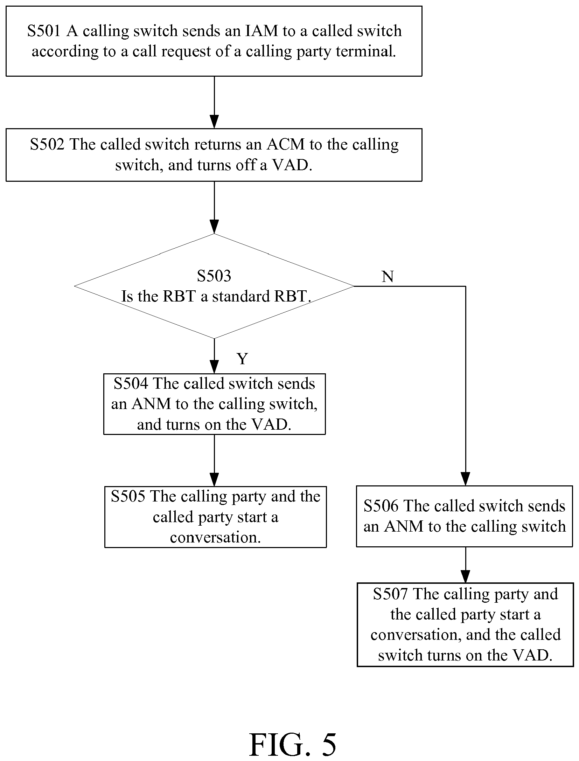

FIG. 5 is a flow chart of this embodiment, which includes the following steps.

In Step S501, the calling switch sends an IAM message to the called switch according to a call request of the calling party terminal.

In Step S502, the called switch returns an ACM message to the calling switch, and turns off the VAD function of the encoder in the call path.

In Step S503, after receiving the IAM message, the called switch detects the RBT of this call. If it is detected that the RBT of this call is a standard RBT, the process proceeds with Step S504; otherwise, it proceeds with Step S506.

In Step S504, the VAD function of the encoder in the call path is turned on, and the called switch sends an ANM message to the calling switch.

In Step S505, the calling party and the called party start a conversation.

In Step S506, the called switch sends an ANM message to the calling switch. If the VAD function of the encoder in the call path is not turned on, the called switch turns on the VAD function of the encoder in the call path.

In Step S507, the calling party and the called party start a conversation.

When most of the users in the network have not subscribed CRBT services, such a method for detecting an RBT is very effective, and a large amount of bandwidth can be saved.

In this embodiment, the called switch detects whether an RBT is a standard RBT or not. However, when the technical solution provided in this embodiment of the present invention is specifically applied, the CRBT service not only can be realized by a called side device, but also can be realized by other devices in the call path, so that a device for detecting an RBT is not limited to the called switch, but may also be, for example, the calling switch, or one or more other switches between the calling party and the called party.

An illustrative example, which is not part of the invention:

A VOIP device at the called side does not determine whether a called party has applied for a CRBT service and does not detect whether an RBT of the called party is received, but directly turns off a VAD function of an encoder in a call path, and turns on a configurable timer X at the same time. When a time set by the timer X is up or a calling party and the called party enter a conversation state, the VOIP device at the called side turns on the VAD function of the encoder in the call path. The time set by the timer X may be a longest waiting time before on-hook due to no answer from the called party in the network, an average duration between ringing and pick-up of a user, or a time specified by a user. FIG. 1 is a structural view of a system of this embodiment. The system includes a calling party terminal, a calling switch, a called switch, a CRBT center, and a called party terminal.

FIG. 6 is a block diagram illustrating the principle of the called switch. The called switch includes a control unit and a timer. The control unit is configured to turn off the VAD function of the encoder in the call path and turns on the timer as soon when a call starts. When a time set by the timer is up or the calling party and the called party enter a conversation state, the control unit turns on the VAD function of the encoder in the call path.

FIG. 7 is a flow chart of this example, which includes the following steps.

In Step S701, the calling switch sends an IAM message to the called switch according to a call request of the calling party terminal.

In Step S702, the called switch returns an ACM message to the calling switch, and turns off the VAD function of the encoder in the call path.

In Step S703, after receiving the IAM message, the called switch turns on the timer.

In Step S704, when a time set by the timer is up or the calling party and the called party enter a conversation state, the VAD function of the encoder in the call path is turned on.

In Step S705, the called switch sends an ANM message to the calling switch.

In Step S706, the calling party and the called party start a conversation.

Time-up up of the time set by the timer may take place before or after the process that the called switch sends the ANM message to the calling switch, depending on the length of the time set by the timer as well as the time between ringing and answering of the called party.

In view of the above, the VAD function of the encoder in the call path is controlled in stages: the VAD function is turned off in the RBT stage, and is turned on in the conversation stage, so that the CRBT will not be affected by the VAD when being transferred, and the bandwidth occupied for transferring conversation voices is decreased to the greatest extent, thus meeting the requirement on the musical effect when the CRBT service is transferred, without occupying too much bandwidth.

Those of ordinary skill in the art should understand that that all of or a part of processes in the method according to the embodiments may be implemented by a computer program instructing relevant hardware. The program may be stored in a computer readable storage medium. When the program is executed, the processes of the method according to the embodiments of the present invention are performed. The storage medium may be a magnetic disk, an optical disk, a read-only memory (ROM) or a random access memory (RAM).

## Claims

1. A method for controlling voice activity detection, VAD, **characterized in that** it comprises the following steps:
determining, by a switch, whether a ring back tone, RBT, is a personalized RBT when a called party sends the RBT in response to a call request of a calling party, wherein the RBT comprises one of the personalized RBT and a standard RBT, and the personalized RBT is a color ring back tone, CRBT; if the RBT is the personalized RBT, turning off, by the switch, a VAD function of an encoder in a call path; and
turning on, by the switch, the VAD function of the encoder when the switch identifies the calling party and the called party are in a conversation state.

2. The method of claim 1, **characterized in that** it comprises the following step:
determining whether the RBT is the personalized RBT based on subscription data of the called party.

3. The method of claim 1, **characterized in that** it comprises the following step:
determining whether the RBT is the personalized RBT based on a service code of the call and a called number.

4. A method for controlling voice activity detection, VAD, **characterized in that** it comprises the following steps:
turning off, by a switch, a VAD function of an encoder in a call path when a called party sends a ring back tone, RBT, in response to a call request of a calling party, wherein the RBT comprises one of a personalized RBT and a standard RBT, and the personalized RBT is a color ring back tone, CRBT;
detecting whether a standard RBT of the called party is received, if a standard RBT of the called party is received, tuning on the VAD function of the encoder; otherwise, turning on, by the switch, the VAD function of the encoder when the switch identifies the called party and the calling party are in a conversation state.

5. A switch, **characterized in that** the switch comprises an identification unit, an determination unit and a control unit, wherein
the determination unit is configured to determine whether a ring back tone, RBT, of a call is a personalized RBT, and instruct the control unit to turn off a voice activity detection, VAD, function of an encoder in a call path if the RBT is the personalized RBT, wherein the RBT comprises one of the personalized RBT and a standard RBT, and the personalized RBT is a color ring back tone, CRBT; and
the identification unit is configured to identify whether a calling party and a called party are in a conversation stage, and instruct the control unit to turn on the VAD function of the encoder if the calling party and the called party are in the conversation stage.

6. A switch, **characterized in that** the switch comprises an identification unit, a control unit and a detection unit, wherein
the identification unit is configured to identify whether a calling party and a called party are in a ring back tone, RBT, stage or in a conversation stage, and transmit an identification result to the control unit;
the detection unit is configured to detect whether an RBT of a call is a standard RBT, and transmit a detection result to the control unit, wherein the RBT comprises one of a personalized RBT and the standard RBT, and the personalized RBT is a color ring back tone, CRBT; and
the control unit is configured to turn off a voice activity detection, VAD, function of an encoder in the call path when the called party and the calling party are in the RBT stage, turn on the VAD function of the encoder if the detection unit detects the RBT is the standard RBT, and do not turn on the VAD function of the encoder in the call path until the called party and the calling party are in the conversation stage if the detection unit detects the RBT is not the standard RBT.

7. The switch of claim 6, **characterized in that** the control unit is further configured to turn on the VAD function of the encoder in the conversation stage if the RBT is the personalized RBT.

8. A computer program product, **characterized in that** it comprises a computer program code, which,
when executed by a computer unit, will cause the computer unit to implement the method of claim 1 or 4.

## Patentansprüche

1. Verfahren zum Steuern einer Sprachpausendetektion, VAD, **dadurch gekennzeichnet, dass** es die folgenden Schritte umfasst:
Bestimmen, durch eine Vermittlungsstelle, ob ein Freizeichenton, RBT (Ring Back Tone), ein personalisierter RBT ist, wenn eine angerufene Partei den RBT als Reaktion auf eine Anrufanforderung einer anrufenden Partei sendet, wobei der RBT den personalisierten RBT oder einen Standard-RBT umfasst und der personalisierte RBT ein Farb-Freizeichenton, CRBT (Color Ring Back Tone), ist; falls der RBT der personalisierte RBT ist, Ausschalten, durch die Vermittlungsstelle, einer VAD-Funktion eines Codierers in einem Anrufpfad; und
Einschalten, durch die Vermittlungsstelle, der VAD-Funktion des Codierers, wenn die Vermittlungsstelle identifiziert, dass sich die anrufende Partei und die angerufene Partei in einem Konversationszustand befinden.

2. Verfahren nach Anspruch 1, **dadurch gekennzeichnet, dass** es den folgenden Schritt umfasst:
Bestimmen, ob der RBT der personalisierte RBT ist, basierend auf Subskriptionsdaten der angerufenen Partei.

3. Verfahren nach Anspruch 1, **dadurch gekennzeichnet, dass** es den folgenden Schritt umfasst:
Bestimmen, ob der RBT der personalisierte RBT ist, basierend auf einem Dienstcode des Anrufs und einer angerufenen Nummer.

4. Verfahren zum Steuern einer Sprachpausendetektion, VAD, **dadurch gekennzeichnet, dass** es die folgenden Schritte umfasst:
Ausschalten, durch eine Vermittlungsstelle, einer VAD-Funktion eines Codierers in einem Anrufpfad, wenn eine angerufene Partei einen Freizeichenton, RBT, als Reaktion auf eine Anrufanforderung einer anrufenden Partei sendet, wobei der RBT einen personalisierten RBT oder einen Standard-RBT umfasst und der personalisierte RBT ein Farb-Freizeichenton, CRBT, ist;
Detektieren, ob ein Standard-RBT der angerufenen Partei empfangen wird, falls ein Standard-RBT der angerufenen Partei empfangen wird, Einschalten der VAD-Funktion des Codierers; ansonsten Einschalten, durch die Vermittlungsstelle, der VAD-Funktion des Codierers, wenn die Vermittlungsstelle identifiziert, dass sich die angerufene Partei und die anrufende Partei in einem Konversationszustand befinden.

5. Vermittlungsstelle, **dadurch gekennzeichnet, dass** die Vermittlungsstelle eine Identifikationseinheit, eine Bestimmungseinheit und eine Steuereinheit umfasst, wobei
die Bestimmungseinheit zum Bestimmen, ob ein Freizeichenton, RBT, eines Anrufs ein personalisierter RBT ist, und zum Anweisen der Steuereinheit zum Ausschalten einer Sprachpausendetektion- bzw. VAD-Funktion eines Codierers in einem Anrufpfad, falls der RBT der personalisierte RBT ist, konfiguriert ist, wobei der RBT den personalisierten RBT oder einen Standard-RBT umfasst und der personalisierte RBT ein Farb-Freizeichenton, CRBT, ist; und
die Identifikationseinheit zum Identifizieren, ob sich eine anrufende Partei und eine angerufene Partei in einer Konversationsphase befinden, und Anweisen der Steuereinheit zum Einschalten der VAD-Funktion des Codierers, falls sich die anrufende Partei und die angerufene Partei in einer Konversationsphase befinden, konfiguriert ist.

6. Vermittlungsstelle, **dadurch gekennzeichnet, dass** die Vermittlungsstelle eine Identifikationseinheit, eine Steuereinheit und eine Detektionseinheit umfasst, wobei die Identifikationseinheit zum Identifizieren, ob sich eine anrufende Partei und eine angerufene Partei in einer Freizeichenton- bzw. RBT-Stufe oder in einer Konversationsphase befinden, und zum Übertragen eines Identifikationsergebnisses an die Steuereinheit konfiguriert ist,
die Detektionseinheit zum Detektieren, ob ein RBT eines Anrufs ein Standard-RBT ist, und zum Übertragen eines Detektionsergebnisses an die Steuereinheit konfiguriert ist, wobei der RBT einen personalisierten RBT oder einen Standard-RBT umfasst und der personalisierte RBT ein Farb-Freizeichenton, CRBT, ist; und die Steuereinheit zum Ausschalten einer Sprachpausendetektion- bzw. VAD-Funktion eines Codierers in dem Anrufpfad, wenn sich die angerufene Partei und die anrufende Partei in der RBT-Phase befinden, Einschalten der VAD-Funktion des Codierers, falls die Detektionseinheit detektiert, dass der RBT der Standard-RBT ist, und zum Nichteinschalten der VAD-Funktion des Codierers in dem Anrufpfad, bis sich die angerufene Partei und die anrufende Partei in der Konversationsphase befinden, falls die Detektionseinheit detektiert, dass de RBT nicht der Standard-RBT ist, konfiguriert ist.

7. Vermittlungsstelle nach Anspruch 6, **dadurch gekennzeichnet, dass** die Steuereinheit ferner zum Einschalten der VAD-Funktion des Codierers in der Konversationsphase konfiguriert ist, falls der RBT der personalisierte RBT ist.

8. Computerprogrammprodukt, **dadurch gekennzeichnet, dass** es einen Computerprogrammcode umfasst, der, wenn er durch eine Computereinheit ausgeführt wird, die Computereinheit zum Implementieren des Verfahrens nach Anspruch 1 oder 4 veranlassen wird.

## Revendications

1. Procédé de contrôle d'une détection d'activité vocale (VAD), **caractérisé en ce qu'**il comprend les étapes suivantes consistant à :
déterminer, par un commutateur, si une tonalité de retour d'appel (RBT) est une RBT personnalisée quand une partie appelée envoie la RBT en réponse à une demande d'appel d'une partie appelante, la RBT comprenant la RBT personnalisée ou une RBT standard, et la RBT personnalisée étant une tonalité colorée de retour d'appel (CRBT) ; si la RBT est la RBT personnalisée, désactiver, par le commutateur, une fonction VAD d'un codeur dans un chemin d'appel ; et
activer, par le commutateur, la fonction VAD du codeur quand le commutateur identifie que la partie appelante et la partie appelée sont dans un état de conversation.

2. Procédé selon la revendication 1, **caractérisé en ce qu'**il comprend l'étape suivante consistant à :
déterminer si la RBT est la RBT personnalisée sur la base de données d'abonnement de la partie appelée.

3. Procédé selon la revendication 1, **caractérisé en ce qu'**il comprend l'étape suivante consistant à :
déterminer si la RBT est la RBT personnalisée sur la base d'un code de service de l'appel et d'un numéro appelé.

4. Procédé de contrôle d'une détection d'activité vocale (VAD), **caractérisé en ce qu'**il comprend les étapes suivantes consistant à :
désactiver, par un commutateur, une fonction VAD d'un codeur sur un chemin d'appel quand une partie appelée envoie une tonalité de retour d'appel (RBT) en réponse à une demande d'appel d'une partie appelante, la RBT comprenant une RBT personnalisée ou une RBT standard, et la RBT personnalisée étant une tonalité colorée de retour d'appel (CRBT) ;
détecter si une RBT standard de la partie appelée est reçue et activer la fonction VAD du codeur si une RBT standard de la partie appelée est reçue ; sinon, activer, par le commutateur, la fonction VAD du codeur quand le commutateur identifie que la partie appelée et la partie appelante sont dans un état de conversation.

5. Commutateur, le commutateur étant **caractérisé en ce qu'**il comprend une unité d'identification, une unité de détermination et une unité de contrôle,
l'unité de détermination étant configurée pour déterminer si une tonalité de retour d'appel (RBT) d'un appel est une RBT personnalisée et pour donner l'instruction à l'unité de contrôle de désactiver une fonction de détection d'activité vocale (VAD) d'un codeur sur un chemin d'appel si la RBT est la RBT personnalisée, la RBT comprenant la RBT personnalisée ou une RBT standard, et la RBT personnalisée étant une tonalité colorée de retour d'appel (CRBT) ; et
l'unité d'identification étant configurée pour identifier si une partie appelante et une partie appelée sont à un stade de conversation et pour donner l'instruction à l'unité de contrôle d'activer la fonction VAD du codeur si la partie appelante et la partie appelée sont au stade de conversation.

6. Commutateur, le commutateur étant **caractérisé en ce qu'**il comprend une unité d'identification, une unité de contrôle et une unité de détection,
l'unité d'identification étant configurée pour identifier si une partie appelante et une partie appelée sont à un stade de tonalité de retour d'appel (RBT) ou à un stade de conversation et pour transmettre un résultat d'identification à l'unité de contrôle ; l'unité de détection étant configurée pour détecter si une RBT d'un appel est une RBT standard et pour transmettre un résultat de détection à l'unité de contrôle, la RBT comprenant une RBT personnalisée ou la RBT standard et la RBT personnalisée étant une tonalité colorée de retour d'appel (CRBT) ; et
l'unité de contrôle étant configurée pour désactiver une fonction de détection d'activité vocale (VAD) d'un codeur sur le chemin d'appel quand la partie appelée et la partie appelante sont au stade RBT, pour activer la fonction VAD du codeur si l'unité de détection détecte que la RBT est la RBT standard et pour ne pas activer la fonction VAD du codeur sur le chemin d'appel tant que la partie appelée et la partie appelante ne sont pas au stade de conversation si l'unité de détection détecte que la RBT n'est pas la RBT standard.

7. Commutateur selon la revendication 6, **caractérisé en ce que** l'unité de contrôle est en outre configurée pour activer la fonction VAD du codeur au stade de conversation si la RBT est la RBT personnalisée.

8. Produit de programme informatique, **caractérisé en ce qu'**il comprend un code de programme informatique qui, lorsqu'il est exécuté par une unité informatique, amène l'unité informatique à mettre en œuvre le procédé selon la revendication 1 ou 4.
